# FASCICULE DE BREVET EUROPEEN

(11) **EP 1 824 619 B1**
(45) Date de publication et mention de la délivrance du brevet: **23.04.2008**
(21) Numéro de dépôt: 05819323.6
(22) Date de dépôt: 08.11.2005
(51) Int. Cl.: B21C 51/00, G01N 19/08, B24B 33/055

(54) **PROCEDE ET DISPOSITIF D'INSPECTION D'UNE BANDE LAMINEE**
VERFAHREN UND VORRICHTUNG ZUR INSPEKTION VON WALZBAND
METHOD AND DEVICE FOR THE INSPECTION OF A ROLLED STRIP

(30) Priorité: 10.11.2004 FR 0452595
(43) Date de publication de la demande: 29.08.2007
(73) Titulaire: Siemens VAI Metals Technologies SAS, 42400 Saint Chamond (FR)
(72) Inventeur: ROSSIGNEUX, Bernard, F-42600 Montbrison (FR)
(74) Mandataire: Michelet, Alain
(86) Numéro de dépôt international: PCT/FR2005/050936
(87) Numéro de publication internationale: WO 2006/051239

(56) Documents cités:
- PATENT ABSTRACTS OF JAPAN vol. 006, no. 187 (M-158), 25 septembre 1982 (1982-09-25) -& JP 57 094417 A (ISHIKAWAJIMA ZOSEN KAKOKI KK; others: 01), 11 juin 1982 (1982-06-11)
- PATENT ABSTRACTS OF JAPAN vol. 008, no. 234 (M-334), 26 octobre 1984 (1984-10-26) -& JP 59 113916 A (KAWASAKI SEITETSU KK), 30 juin 1984 (1984-06-30)
- PATENT ABSTRACTS OF JAPAN vol. 017, no. 666 (P-1656), 8 décembre 1993 (1993-12-08) -& JP 05 223728 A (SUMITOMO METAL IND LTD; others: 01), 31 août 1993 (1993-08-31)

## Description

L'invention a pour objet un procédé et un dispositif d'inspection d'un produit en bande, en particulier, une bande métallique laminée.

Au cours du laminage d'un produit en bande telle qu'une tôle, il peut se produire un marquage de l'une ou l'autre face du produit, par exemple au contact des cylindres de laminage et ce marquage se répète périodiquement au cours du laminage et se retrouve donc tout au long de la bobine après enroulement de la bande. II est donc nécessaire, pour détecter d'éventuels défauts géométriques du produit, d'inspecter périodiquement les tôles qui sortent d'un laminoir. Pour cela, on a proposé, par exemple, d'utiliser des dispositifs du type comportant une dérouleuse/enrouleuse associée à une table d'inspection. Une bobine inspectée est alors sortie du convoyeur habituel pour être placée sur cette dérouleuse qui permet de dérouler sur la table une certaine longueur de bande pour une inspection visuelle. De tels dispositifs sont lourds et coûteux et ne permettent d'inspecter qu'une seule face de la bande. De plus, ils nécessitent une implantation particulière du fait qu'il faut sortir la bobine à inspecter du circuit de production et la réintroduire ensuite.

On a aussi proposé d'utiliser des dispositifs en ligne permettant de contrôler une certaine longueur de bande préalablement coupée et formant un échantillon de bande qui peut être posé sur une table d'inspection puis retourné pour inspecter l'autre face.

Le document JP-A-59113916, par exemple, divulgue une installation d'inspection de ce genre comportant deux tables d'inspection écartées, constituées chacune d'un convoyeur à courroies, entre lesquelles est placé un dispositif de retournement, éventuellement en deux parties, comportant deux convoyeurs à courroies superposés, qui sont disposés de part et d'autre d'un plan de défilement de la bande métallique et montés sur un ou deux châssis rotatif comportant chacun deux plateaux circulaires pouvant tourner autour d'un axe longitudinal passant par le plan de défilement de la bande. Une plaque d'une certaine longueur est amenée d'abord sur le premier convoyeur à courroies constituant une table d'inspection de sa face supérieure, puis est transférée dans le dispositif de retournement, de façon à être maintenue entre les deux convoyeurs à courroies superposés. Après rotation autour de l'axe longitudinal et retournement de la plaque, celle-ci est transférée sur le convoyeur à courroies constituant une seconde table, placée en aval, pour l'inspection de la seconde face. Pour s'adapter à la longueur de la plaque à examiner, le dispositif de retournement comporte deux châssis successifs de longueurs différentes pouvant fonctionner séparément ou simultanément.

Une telle installation, comportant tout un ensemble de convoyeurs à courroies, est assez complexe et encombrante.

D'autre part, on utilisait jusqu'à présent des techniques d'inspection visuelle, par exemple sous une certaine lumière mais on a proposé plus récemment d'utiliser une autre technique dite « pierrage » qui consiste à faire passer une pierre sur une face de la bande posés sur une table, afin de faire apparaître les défauts éventuels. Une telle technique peut être utilisée sur un petit échantillon de la bande, le retournement étant effectué manuellement, mais il est souvent préféré d'effectuer l'inspection sur une longueur plus importante, par exemple de 10 à 15 mètres, afin de repérer les défauts qui apparaissent, de manière périodique, lors du laminage et peuvent avoir différentes causes. On peut, à cet effet, prélever sur la bande un échantillon de la longueur voulue mais si cet échantillon est posé sur une table pour effectuer le pierrage sur la face supérieure, la face inférieure risque d'être marquée par contact avec la table et, après retournement, il est difficile de savoir si les défauts éventuellement repérés résultent du laminage ou bien de l'opération de pierrage elle-même, de tels défauts étant du genre artéfact.

L'invention a pour objet un procédé et un dispositif permettant de résoudre de tels problèmes, en évitant, notamment, que les contraintes des moyens d'inspection risquent d'endommager la face qui n'a pas encore été inspectée.

D'autre part, l'invention peut s'adapter facilement à différents types d'installation. En effet, le dispositif de retournement qui est relativement peu encombrant peut être placé à la sortie d'une installation de laminage continu, en aval des bobineuses mais, le procédé selon l'invention permet aussi l'inspection, de façon plus classique, d'une bobine prélevée sur le circuit de production et placée sur une dérouleuse.

L'invention concerne donc, d'une façon générale, l'inspection d'une bande laminée sur laquelle est prélevé un échantillon de bande qui est inspecté d'abord sur une première face puis retourné pour l'inspection d'une seconde face.

Conformément à l'invention, par défilement, parallèlement à son axe longitudinal, de l'échantillon de bande, celui-ci est amené entre deux pinces espacées qui sont serrées respectivement sur chaque extrémité transversale de l'échantillon puis sont écartées longitudinalement l'une de l'autre afin de mettre l'échantillon sous tension pour l'inspection visuelle d'une première face, l'échantillon étant ensuite retourné par rotation simultanée des deux pinces autour de l'axe longitudinal avec maintien de la tension appliquée, de façon à procéder à l'inspection de la seconde face.

Ainsi, dans le cas où l'inspection est réalisée par pierrage, par écartement longitudinal des deux pinces de serrage, l'échantillon de bande peut être mis sous une tension suffisante pour réaliser le pierrage sur la face supérieure, sans application de la face opposée sur une table, l'échantillon étant ensuite retourné tout en étant maintenu sous tension, pour l'inspection par pierrage de la seconde face.

Dans un premier mode de réalisation, l'échantillon de bande est d'abord posé sur une table placée entre les deux pinces écartées qui sont serrées respectivement sur ses deux extrémités puis écartées longitudinalement l'une de l'autre afin de mettre l'échantillon sous tension, la table étant alors retirée pour réaliser l'inspection d'abord sur une première face puis, après retournement, sur la seconde face.

Dans un autre mode de réalisation, la bande enroulée en bobine est placée sur une dérouleuse associée à des moyens de commande du déroulement de la bande suivant une direction longitudinale et à des moyens de cisaillage. Dans ce cas, la bande déroulée est d'abord cisaillée pour réaliser une extrémité amont d'un échantillon de bande qui passe successivement dans deux pinces ouvertes, respectivement une première pince portée par un plateau rotatif centré sur un axe longitudinal de déroulement et une seconde pince porté par un chariot monté coulissant longitudinalement et placée en aval de la première pince, puis la seconde pince est serrée sur ladite extrémité amont et le chariot est déplacé longitudinalement vers l'aval pour commander le déroulement de la bande, et venir se fixer, avec ladite seconde pince, sur un second plateau rotatif écarté longitudinalement du premier plateau et centré sur un axe longitudinal ; la première pince est alors serrée sur la bande et celle-ci est cisaillée pour réaliser une extrémité aval de l'échantillon de bande qui est ainsi maintenue tendue entre les deux pinces et peut être inspectée successivement sur une première face puis sur une seconde face après retournement par rotation simultanée des deux plateaux autour de leur axe, avec maintien de la tension appliquée.

L'invention couvre également un dispositif pour la mise en oeuvre du procédé, comprenant deux pinces de serrage espacées, portées respectivement par deux plateaux montés rotatifs autour d'un même axe longitudinal, des moyens de mise en tension de l'échantillon par écartement relatif des deux pinces l'une par rapport à l'autre, après serrage de chacune sur l'extrémité correspondante de l'échantillon, pour le maintien de celui-ci suivant un plan d'inspection et des moyens de commande de la rotation simultanée, autour de l'axe horizontal, des deux plateaux avec les pinces, pour le retournement de l'échantillon avec maintien de la tension appliquée sur celui-ci par écartement des deux pinces.

A cet effet, chaque plateau rotatif comporte un châssis en forme de disque, limité par une jante circulaire centrée sur l'axe longitudinal de rotation et muni d'une échancrure centrale rectangulaire dans laquelle sont montées deux mâchoires de serrage, respectivement une mâchoire fixe ayant une face de serrage plane placée sensiblement au niveau de l'axe de rotation et une mâchoire mobile comportant une poutre ayant une face de serrage plane parallèle à la face de serrage de la mâchoire fixe et montée coulissante sur le châssis du plateau perpendiculairement aux dites faces planes et un moyen de déplacement des mâchoires l'une vers l'autre pour le serrage et le desserrage desdites faces planes.

De façon particulièrement avantageuse, les deux plateaux rotatifs sont montés respectivement dans deux bâtis de support en forme de cadre écartés l'un de l'autre et centrés sur un plan médian vertical passant par l'axe de rotation, chaque bâti portant au moins deux galets écartés symétriquement de part et d'autre du plan médian, sur lesquels repose le plateau rotatif par une partie inférieure de la jante circulaire, chaque galet tournant autour d'un axe parallèle à l'axe de la jante et des moyens synchronisés de commande de la rotation simultanée, autour de leur axe, des deux plateaux, pour le retournement de l'échantillon serré entre les deux paires de mors.

Dans un premier mode de réalisation de l'invention, le dispositif comprend un moyen de réglage de l'écartement longitudinal entre les deux plateaux rotatifs pour la mise en tension de l'échantillon de bande après serrage des mâchoires. A cet effet, l'un des plateaux est porté par un bâti fixe et l'autre plateau est porté par un bâti mobile monté coulissant sur un support fixe, parallèlement à l'axe longitudinal de rotation des deux plateaux, ledit support fixe portant un moyen de commande du coulissement du bâti mobile pour la mise en tension de l'échantillon de bande après serrage des pinces.

De préférence, le dispositif comprend alors une table mobile verticalement, s'étendant entre les deux plateaux rotatifs et ayant une face supérieure plane parallèle à l'axe longitudinal de rotation, et des moyens de déplacement vertical de la table entre une position relevée pour laquelle sa face supérieure se trouve sensiblement au niveau des mâchoires de serrage et une position abaissée.

Le dispositif d'inspection selon l'invention s'applique en particulier à une installation de laminage comportant successivement, le long d'un plan de laminage, au moins une cage de laminage, une cisaille et un dispositif d'enroulement en bobine de la bande laminée.

Dans ce cas, l'installation comporte, en aval de la cisaille, des moyens d'aiguillage ayant deux positions, respectivement une première position de guidage de la bande vers des moyens d'enroulement en bobine de la bande et une seconde position de guidage, vers le dispositif d'inspection, d'un échantillon de bande prélevé sur la bande par cisaillage successif de deux extrémités écartées de la distance voulue.

Avantageusement, les moyens d'amenée de l'échantillon de bande entre les pinces sont agencés de façon à déterminer, après découpe de l'échantillon de bande, un déplacement continu de celle-ci parallèlement à elle-même, jusqu'à une position d'inspection entre les deux plateaux rotatifs.

A cet effet, les moyens d'amenée de l'échantillon de bande comportent une table de support ayant une face supérieure plane s'étendant, dans une position de prise en charge par les pinces, dans le plan de serrage passant par l'axe de rotation des deux plateaux et des moyens de déplacement de l'échantillon de bande, parallèlement à lui-même, depuis la cisaille jusqu'à la table de support.

Dans un autre mode de réalisation, l'invention s'applique à l'inspection d'une bande enroulée en bobine et placée sur une dérouleuse associée à une cisaille. Dans ce cas, le dispositif comporte encore deux pinces de serrage de la bande qui sont placées l'une après l'autre suivant la direction longitudinale de déroulement, respectivement une première pince portée par un premier plateau placé en aval des moyens de cisaillage, dans le sens de déroulement et une seconde pince portée par un chariot monté coulissant, parallèlement à la direction longitudinale de déroulement, entre une position de prise en charge de la bande, placée immédiatement en aval de la première pince, et une position d'inspection pour laquelle le chariot de support de la seconde pince vient se fixer sur un second plateau rotatif, écarté longitudinalement vers l'aval par rapport au premier plateau rotatif, et centré sur un même axe longitudinal, la seconde pince étant d'abord serrée sur une extrémité amont de la bande qui se déplace avec le chariot jusqu'au second plateau et l'échantillon de bande étant alors prélevé par cisaillement de son extrémité aval sur laquelle est serrée la première pince. Après mise en tension de l'échantillon de bande on procède alors à l'inspection d'une première face puis à l'inspection de la seconde face, après rotation simultanée des deux pinces, avec maintien de la tension appliquée.

Pour la mise en tension de l'échantillon de bande, au moins l'une des pinces comporte, d'une part, deux mors de serrage, montés respectivement sur deux poutres de support déplaçables l'une par rapport à l'autre entre une position écartée et une position de serrage des mors et deux rouleaux montés respectivement sur les deux poutres à côté du mors correspondant, au moins l'un des rouleaux étant décalé en hauteur par un moyen élastique, de façon que l'extrémité correspondante de l'échantillon soit pincée entre ledit rouleau décalé et l'autre rouleau avant le serrage des deux mors, après compression dudit moyen élastique.

L'invention couvre également d'autres caractéristiques avantageuses qui apparaîtront dans la description qui va suivre de certains modes de réalisation particuliers, donnés à titre d'exemples non limitatifs et représentés sur les dessins annexés.
La figure 1 est une vue d'ensemble, en élévation, d'un dispositif d'inspection selon l'invention, placé à la sortie d'une installation de laminage.
La figure 2 est une vue de face d'une première pince de serrage montée sur un bâti mobile.
La figure 3 est une vue en coupe selon la ligne AA de la figure 2.
La figure 4 est une vue de face de la seconde pince de serrage montée sur un bâti fixe.
La figure 5 est une vue en coupe selon la ligne BB de la figure 4.
La Figure 6 est une vue d'ensemble, en élévation, d'un autre mode de réalisation de l'invention.
La Figure 7 est une vue de côté d'une pince mobile.
La Figure 8 montre, à droite, une demi-vue de face d'une pince mobile et, à gauche, une demi-vue en coupe selon la ligne CC de la Figure 7.
La Figure 9 est une vue de côté d'une pince fixe.
La Figure 10 montre, à gauche une demi-vue de face et à droite une demi-vue en coupe de la pince selon la Figure 9.

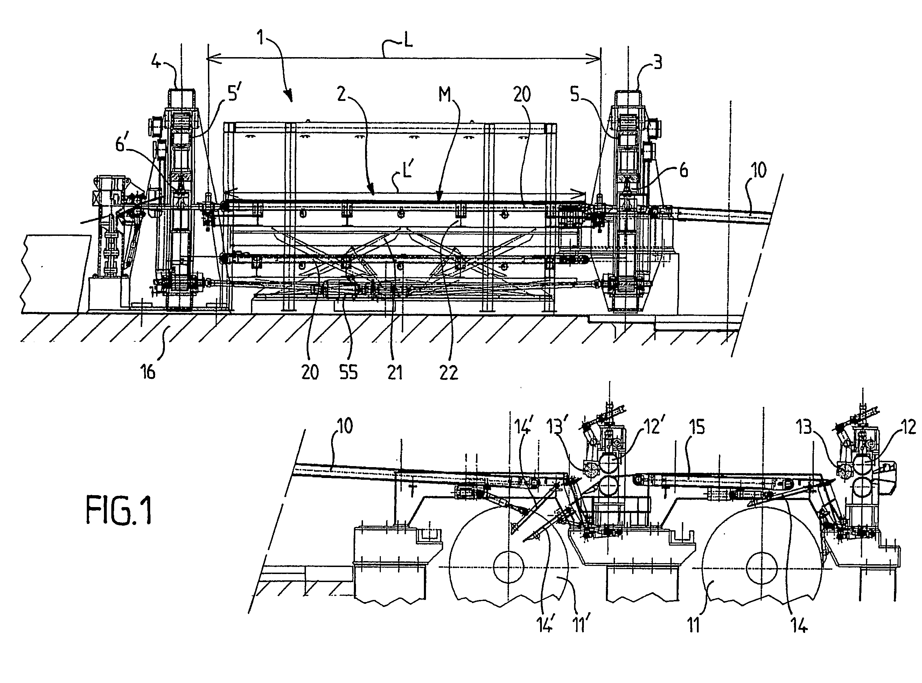

Sur la figure 1, on a représenté, en élévation, l'ensemble d'un dispositif d'inspection 1 placé en aval d'une installation de traitement en continu d'une bande, par exemple de laminage. Cette installation n'est pas représentée sur le dessin qui en montre seulement la sortie comportant, comme habituellement, deux bobineuses 11, 11' fonctionnant alternativement pour permettre un défilement continu de la bande laminée.

Chaque bobineuse 11, 11' est équipée d'une paire de rouleaux pinceurs 12, 12', d'un rouleau aiguilleur 13, 13' mobile verticalement et d'un dispositif de guidage 14, 14'. A la fin de l'enroulement d'une bobine, par exemple sur la première bobineuse 11, une cisaille volante, placée en amont et non représentée sur le dessin permet de couper la queue de la première bande. Celle-ci termine son enroulement sur la bobineuse 11 et la tête de la partie suivante de la bande est dirigée par une table intermédiaire 15 vers la seconde bobineuse 11' et déviée vers le mandrin de celle-ci par le rouleau aiguilleur 13' et le dispositif de guidage 14'. La tête de la bande s'engage alors sur le mandrin qui est entraîné en rotation pour commencer l'enroulement de la bobine suivante.

Tous ces dispositifs sont bien connus et ne nécessitent pas une description détaillée.

En outre, d'autres dispositifs peuvent être utilisés pour l'enroulement des bobines successives sans arrêt du défilement de la bande, par exemple, une bobineuse à carrousel.

Pour effectuer une inspection sur une bande continue en cours de défilement, la cisaille volante placée comme on l'a vu, en amont de l'installation de bobinage, réalise deux coupes successives afin de couper un échantillon de bande M ayant une longueur relativement importante, par exemple de 10 à 15 mètres. De préférence, ce prélèvement s'effectue à la fin de l'enroulement d'une bobine de façon que, après évacuation de l'échantillon de bande vers le dispositif d'inspection, la bande puisse être engagée sur la nouvelle bobineuse, de la façon indiquée plus haut.

Après les deux coupes permettant d'isoler un échantillon de bande, celui-ci est dirigé par les organes d'aiguillage équipant chaque bobine vers le dispositif d'inspection 1, en passant sur une table de transfert 10 qui s'étend dans le prolongement de la table intermédiaire 15, entre la deuxième bobineuse 11' et l'extrémité amont du dispositif d'inspection 1.

D'une façon générale, le dispositif d'inspection comporte deux bâtis, respectivement amont 3 et aval 4, écartés longitudinalement d'une distance L au moins égale à la longueur de l'échantillon de bande M et portant chacun un plateau rotatif, respectivement amont 5 et aval 5', sur lequel est montée une pince de serrage, respectivement amont 6 et aval 6'.

Entre les deux bâtis 3 et 4 est disposé un dispositif de liaison 2 comportant une table mobile 20 qui, pour la mise en place de l'échantillon de bande M dans le dispositif d'inspection 1, se trouve dans le prolongement de la table de transfert 10.

Par ailleurs, l'un des bâtis, par exemple le bâti aval 4, est fixe alors que l'autre bâti, par exemple le bâti amont 3, peut être déplacé longitudinalement afin de régler la distance L entre les deux bâtis pour mettre en tension l'échantillon de bande de la façon décrite plus loin.

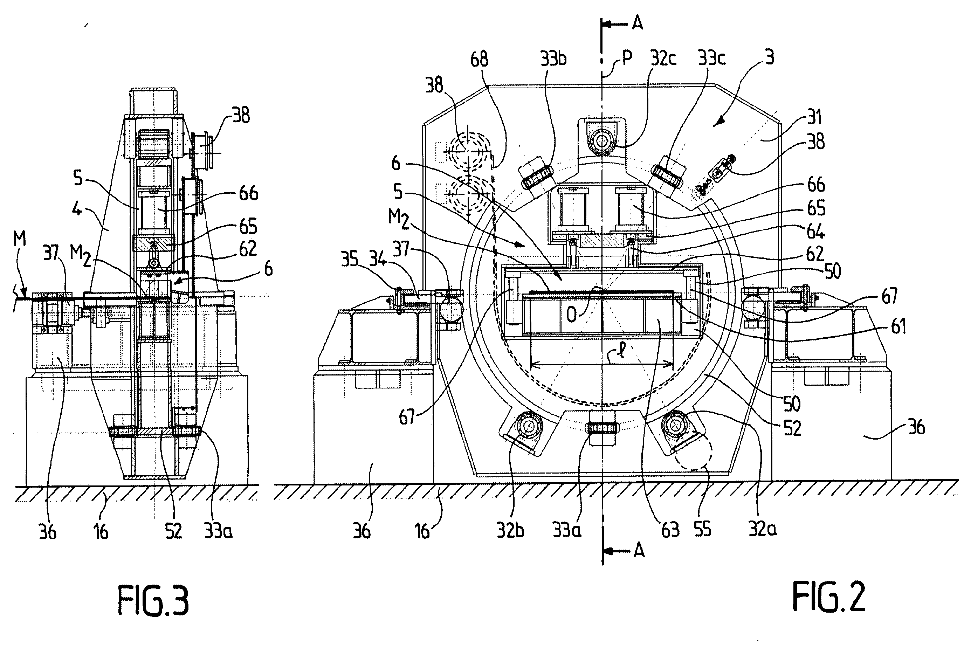

Les figures 2 et 3 montrent, respectivement, en vue de face et en coupe, le bâti amont 3 qui est constitué, d'une façon générale, d'un cadre rigide 31 limitant une ouverture 30 de forme générale circulaire, centrée sur un axe longitudinal O et dans laquelle est placé le plateau rotatif 5 portant la pince amont 6.

Le plateau 5, réalisé en construction mécano-soudée, comporte un châssis en forme de caisson creux limité latéralement par deux flasques 51 et extérieurement par une jante circulaire 52 qui repose sur deux galets inférieurs 32a, 32b écartés symétriquement de part et d'autre d'un plan médian vertical P du bâti 3 et est maintenue verticalement par un galet supérieur 32c centré dans ce plan P. Les trois galets 32a, 32b, 32c sont montés rotatifs sur le bâti 3 autour d'axes parallèles à l'axe longitudinal O et disposés de façon à centrer la jante circulaire 52 sur cet axe O.

En outre, le plateau rotatif 5 est maintenu latéralement par trois paires de galets, respectivement inférieurs 33a et supérieurs 33b, 33c, montés rotatifs autour d'axes concourrants passant par l'axe longitudinal O et qui prennent appui sur les côtés latéraux de la jante circulaire 52.

Au moins l'un des galets inférieurs de support 32a est entraîné en rotation par un moteur 55 afin de commander la rotation du plateau 5 autour de l'axe longitudinal O.

Le plateau 5 porte une pince de serrage 6 comportant deux mâchoires, respectivement une mâchoire inférieure fixe 61 et une mâchoire supérieure mobile 62 avec, respectivement, deux faces de serrage planes parallèles entre elles et à l'axe longitudinal O.

La mâchoire inférieure 61 comprend un mors de serrage ménagé sur une poutre 63 prenant appui directement sur la partie inférieure du plateau rotatif 5. En revanche, la mâchoire supérieure 62 comprend un mors de serrage constitué d'une plaque reliée par des bielles articulées 64 à une poutre de support 65 qui peut coulisser dans le plateau 5 perpendiculairement à la face de serrage 62, sous l'action de deux vérins 66, de préférence pneumatiques.

Des tiges de guidage 67 fixées sous la face inférieure de la mâchoire 62 et coulissant dans des logements correspondants de la poutre inférieure 63 permettent de garantir le parallélisme des faces de serrage 61, 62.

Les deux faces de serrage 61, 62 ont une largeur au moins égale à la largeur maximale I de la bande à inspecter 7 et la face de serrage de la mâchoire inférieure 61 est disposée sensiblement au niveau de l'axe longitudinal O.

D'autre part, le plateau rotatif 5 est muni, au niveau des deux mâchoires 61, 62, d'une échancrure rectangulaire 50 permettant le passage de la bande entre les deux mors.

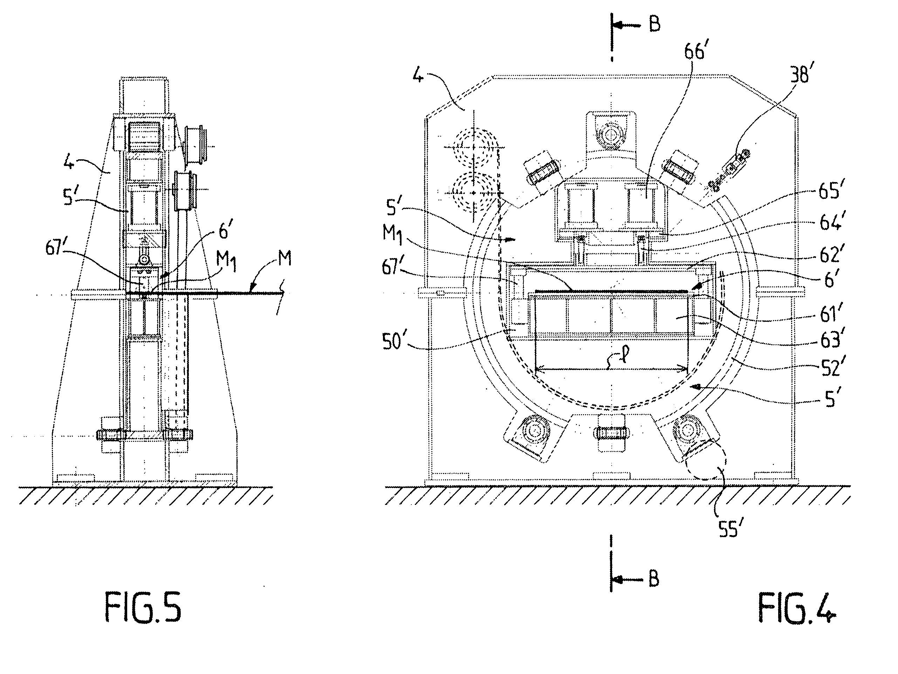

Comme le montrent les figures 4 et 5, la seconde pince de serrage 6' montée sur le bâti aval 4 est tout à fait analogue à la pince amont 6 qui vient d'être décrite et comprend donc, d'une façon générale, une mâchoire fixe 61' placée au niveau de l'axe longitudinal O et une mâchoire mobile 62' comportant un mors de serrage constitué d'une plaque reliée par des bielles 64' à une poutre coulissante 65' actionnée par des vérins 66'.

L'ensemble est porté par un plateau 5' monté rotatif sur le bâti aval 4, de la même façon que le plateau 5 sur le bâti amont 3.

Un même moteur 55 ou bien deux moteurs 55 et 55' tournant en synchronisme, permettent de commander la rotation simultanée des deux plateaux 5, 5' autour de l'axe longitudinal O. Chaque bâti 3, 4 est muni d'un dispositif de clamage 38, 38' prenant appui sur la jante 52, 52' pour bloquer le plateau correspondant 5, 5' dans une position pour laquelle les faces de serrage des deux mâchoires de chaque pince 6, 6' sont parallèles entre elles et, de préférence, horizontales.

Comme le montrent les figures 4 et 5, le bâti aval 4 est constitué d'un cadre rigide 41 fixé directement sur le massif de fondation 16.

En revanche, le bâti amont 3 représenté sur les figures 2 et 3, peut se déplacer parallèlement à l'axe longitudinal O et, à cet effet, est porté par deux rails latéraux 34 coulissant dans des glissières 35 montées respectivement sur deux blocs de support fixes 36 placés de part et d'autre du cadre 31 du bâti 3. Le coulissement du bâti 3 est commandé par deux vérins 37 prenant appui, respectivement, sur les deux blocs de support 36 et actionnés en synchronisme.

Comme le montre la figure 1, entre les deux bâtis 3 et 4, est placé un dispositif de liaison 2 comportant une table 20 qui, pour la mise en place de l'échantillon de bande M, se trouve placée au niveau de l'axe longitudinal O des deux pinces 6, 6', dans le prolongement de la table de transfert 10.

Etant donné que la bande laminée peut être très mince, la table intermédiaire 15 conduisant la bande, après cisaillage, vers la seconde bobineuse 11', peut avantageusement être du type magnétique comportant un tapis roulant associé à des aimants qui appliquent la bande sur le tapis.

Une telle disposition est connue et ne nécessite pas une description détaillée.

Avantageusement, la table de transfert 10 et la table de liaison 20 sont du même type afin de permettre le déplacement longitudinal d'une bande mince, sans risque de pliure de celle-ci.

Ainsi, après la coupe, au moyen de la cisaille volante, d'un échantillon de bande M ayant la longueur souhaitée, celle-ci est transportée successivement par la table intermédiaire 15 et la table de transfert 10 puis traverse le bâti amont 3 en passant par l'ouverture 50 du plateau 5 entre les mors de la pince 6 qui est ouverte. L'échantillon M arrive ainsi sur le tapis de liaison 20 qui le transporte jusqu'au bâti aval 4, de telle sorte que son extrémité avant M1 soit placée entre les mâchoires 61', 62' de la pince aval 6'.

Au moyen des vérins 37, le bâti mobile 3 est positionné en fonction de la longueur de l'échantillon de bande de façon que l'extrémité arrière M2 de celle-ci soit placée entre les mâchoires 61, 62 de la pince amont 6.

Les deux pinces 6, 6' sont alors serrées sur les deux extrémités M2, M1 de l'échantillon de bande et les vérins 37 sont actionnés de façon à repousser vers l'arrière le bâti mobile 3 avec le plateau 5 maintenu par des galets 33, afin de mettre en tension l'échantillon M. Celle-ci étant ainsi maintenue sous traction par les deux pinces 6, 6', la table de liaison 20 peut alors être abaissée dans la position 20' représentée sur la figure 1. A cet effet, le tapis magnétique 20 peut être monté sur un châssis 22 supporté par un dispositif de hauteur variable, par exemple un système de ciseaux 21.

Le tapis de transport 20 qui, dans sa position relevée de mise en place de l'échantillon de bande, se trouvait au niveau de l'axe longitudinal O, est ainsi abaissé d'une distance supérieure à la valeur maximale de la demi-largeur I/2 de l'échantillon de bande M.

Ainsi, après mise en tension de l'échantillon de bande M entre les deux pinces 6, 6', et abaissement de la table de liaison 20, il est possible d'inspecter tout d'abord la face supérieure de l'échantillon puis de commander la rotation simultanée des deux plateaux rotatifs 5, 5' autour de leur axe commun 0 pour retourner l'échantillon M et inspecter sa face opposée.

La mise en tension de l'échantillon M entre les deux pinces 6, 6' permet d'utiliser tout système d'inspection, par exemple, par pierrage, sans appui de l'échantillon sur un support. De ce fait, on évite tout risque de marquage de la face inférieure de l'échantillon résultant de l'inspection de la face supérieure.

Après l'inspection, la table 20 est remontée dans sa position supérieure. L'échantillon de bande M peut alors être libéré par ouverture des pinces 6, 6' et vient reposer à nouveau sur le tapis roulant 20 qui est alors actionné pour évacuer vers l'aval l'échantillon de bande en passant par l'ouverture 50' du plateau aval 5'.

De préférence, une cisaille 44 placée à la sortie du bâti aval 4 permet de débiter en chutes l'échantillon de bande M, au fur et à mesure de son avancement. Mais l'échantillon M peut aussi être retiré par tout autre moyen, par exemple un pont roulant.

Les vérins 66 de serrage des mors sont alimentés en fluide par des conduites 68 qui s'enroulent sur des tambours enrouleurs-dérouleurs 38 montés sur le bâti 3 afin de permettre la rotation, dans un sens ou dans l'autre, du plateau rotatif 5.

Le dispositif d'inspection qui vient d'être décrit permet donc d'inspecter les deux faces d'un échantillon de bande M sans appui de celui-ci sur un support et est particulièrement adapté à une installation de laminage en ligne continue car il peut être placé à la sortie de celle-ci, après les bobineuses, l'échantillon de bande pouvant, avantageusement être prélevé à la fin de l'enroulement d'une bobine ou au début de la bobine suivante.

Cependant, une telle disposition, du fait qu'elle permet l'inspection des deux faces d'un échantillon sans appui sur un support, est encore avantageuse même dans le cas où, comme habituellement, on prélève une bobine à inspecter sur le circuit de production, par exemple sur le convoyeur, pour la placer sur une dérouleuse d'inspection afin de vérifier une certaine longueur de bande.

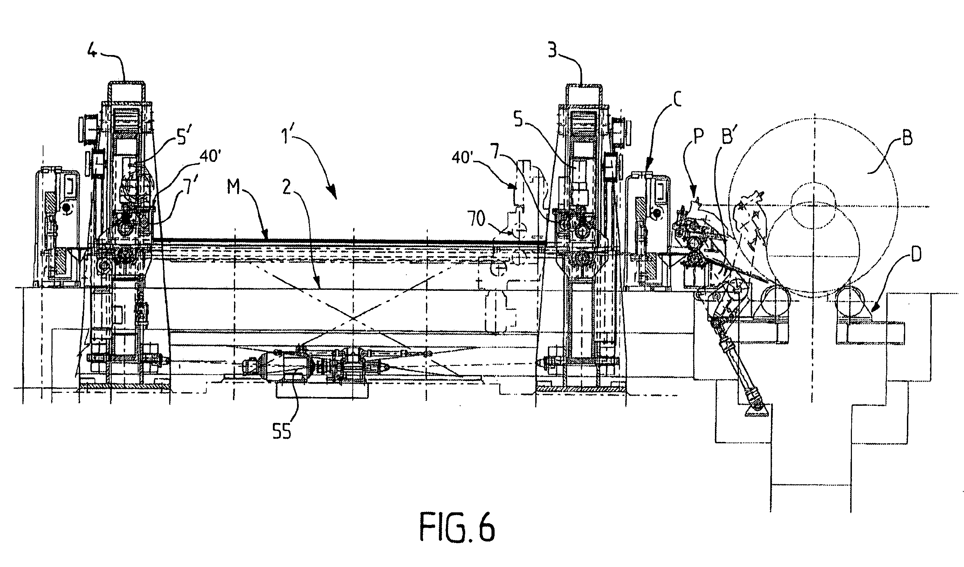

Un dispositif d'inspection du type décrit précédemment peut être, en effet, adapté à un tel cas, par exemple de la façon représentée sur les figures 6 à 10.

Dans ce cas, le dispositif d'inspection 1' comprend encore deux plateaux 5, 5' portant chacun une pince de serrage 7, 7' et montés rotatifs, respectivement dans deux bâtis 3, 4 écartés l'un de l'autre.

Toutefois, ce dispositif n'est pas disposé, comme précédemment, à la sortie d'une installation de laminage ou de traitement en continu d'une bande mais associé simplement à une dérouleuse d'inspection D comportant, comme habituellement, deux rouleaux de support écartés, sur lesquels peut être posée la bobine B à dérouler et des moyens non représentés de commande du déroulement. La tête B' de la bobine peut ainsi être engagée entre une paire de rouleaux pinceurs P qui dirigent la bande vers le dispositif d'inspection 1' en passant dans une cisaille C placée entre les rouleaux pinceurs P et le bâti amont 3 du dispositif d'inspection 1'.

Dans la disposition précédente, l'avancement de la bande pouvait être commandé par la table intermédiaire 15 et la table de transfert 10 qui, comme on l'a indiqué plus haut, sont constituées avantageusement de tapis roulants magnétiques. En revanche, dans la disposition selon la figure 6, on dispose seulement des rouleaux pinceurs P qui ne peuvent pas faire avancer la bande sur une grande longueur. Pour cela, dans ce nouveau mode de réalisation, on utilise donc la pince de serrage aval 7', qui à cet effet, est montée coulissante longitudinalement entre le plateau rotatif aval 5' et le plateau amont 5, de façon à pouvoir venir se placer immédiatement derrière la pince amont 7, dans la position 70 représentée en trait mixte sur la figure 6.

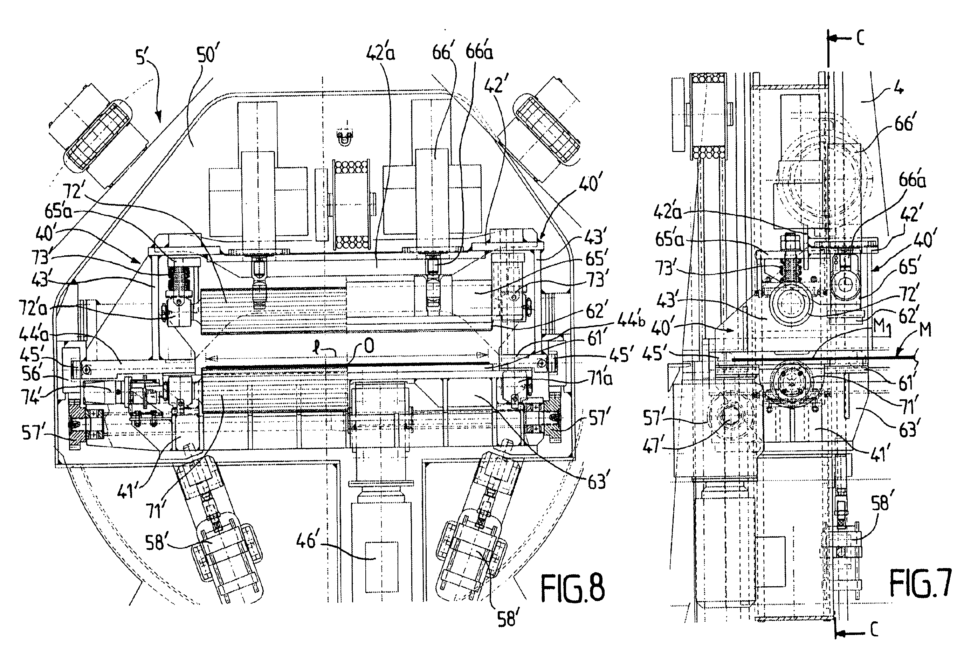

Comme le montrent en détail les figures 7 à 10, les deux pinces de serrage 7, 7' montées respectivement sur les plateaux rotatifs 5, 5' sont réalisées de façon analogue aux pinces de serrage 6, 6' du dispositif de la figure 1 et comportent donc, respectivement, une mâchoire inférieure fixe 61, 61' ménagée sur une poutre 63, 63' prenant appui sur le châssis du plateau 5, 5' et une mâchoire supérieure 62, 62' ménagée sur une poutre supérieure 65, 65' qui est montée coulissante verticalement et actionnée par des vérins 66, 66'.

Toutefois, dans cette nouvelle disposition, chaque mâchoire 61, 62, 61', 62' comprend non seulement une plaque formant un mors de serrage, mais aussi, un rouleau, respectivement inférieur 71, 71' et supérieur 72, 72', destiné à pincer la tôle de la façon qui sera décrite plus loin.

Les figures 7 et 8 montrent, en détail, la pince mobile 7' qui peut se déplacer longitudinalement et, à cet effet, est montée sur un chariot 40' en forme de cadre entourant un espace central de passage de l'échantillon M, et comportant deux traverses, respectivement inférieure 41' et supérieure 42', reliées par des montants latéraux 43' à deux plats horizontaux de support 44'a, 44'b placés sensiblement au niveau de l'axe longitudinal O du dispositif et écartées de part et d'autre de l'espace de passage de la bande. Chaque plat 44' porte une paire de galets de guidage 45' qui coulissent respectivement dans deux tronçons de rails 56 à section en C, parallèles à l'axe longitudinal O et fixés sur le châssis du plateau 5' sur les côtés latéraux de l'échancrure 50', de part et d'autre de l'axe longitudinal O.

La traverse 41' porte, d'autre part, un moteur 46' d'entraînement en rotation d'un arbre transversal 47' tournant sur des paliers et portant, à ses extrémités, deux pignons 57' qui engrènent chacun dans une crémaillère ménagée sur la face inférieure du rail correspondant 56'.

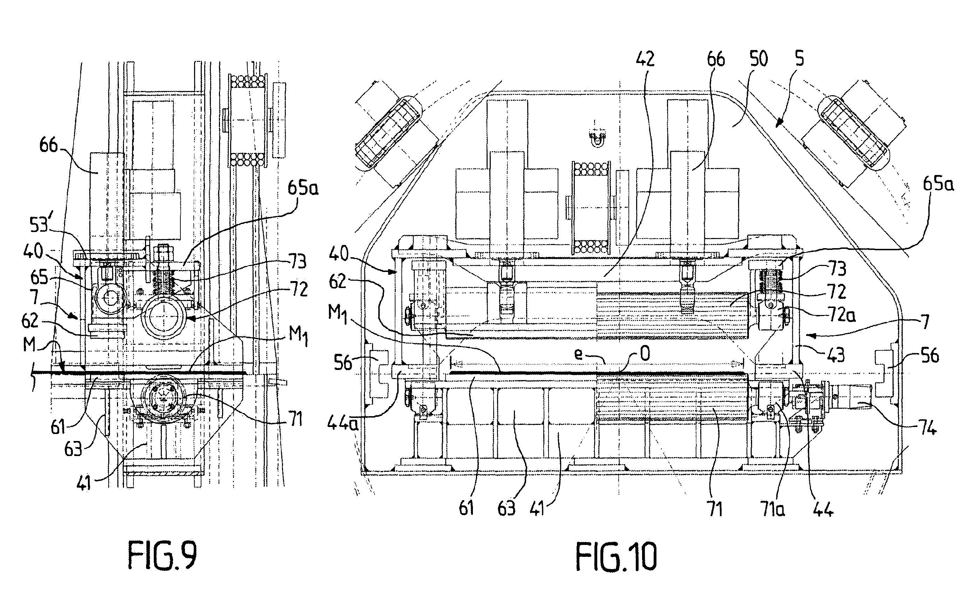

Comme le montrent les figures 9 et 10, la pince amont 7 est montée de façon analogue dans le plateau amont 5, à l'intérieur d'un châssis en forme de cadre 40 comportant une traverse inférieure 41 et une traverse supérieure 42 reliées par des montants latéraux 43 à deux plats horizontaux 44a, 44b placés sensiblement au niveau de l'axe longitudinal O du dispositif. Cependant, dans ce cas, la traverse inférieure 41 du cadre 40 est fixée directement sur le châssis du plateau 5, à la partie inférieure de l'échancrure 50 dans laquelle est placée la pince amont 7, l'ensemble étant fixe axialement.

Les rails 56' du plateau aval 5' s'étendent seulement sur la longueur de celui-ci et, de la même façon, le plateau amont 5 est muni de tronçons de rails 56 fixés sur les côtés de l'échancrure 50. Ces deux paires de rails courts 56, 56' sont disposées dans le prolongement l'une de l'autre et reliées par deux rails 26 fixés de part et d'autre de l'axe longitudinal O sur les côtés latéraux d'un châssis non représenté de liaison entre les deux plateaux 5, 5', de façon à laisser un espace libre de passage du chariot 40' de support de la pince mobile 7'.

De la sorte, le moteur 46' porté par le chariot 40' peut commander le déplacement longitudinal de celui-ci entre la position représentée sur les figures 7 et 8 pour laquelle le chariot 40' et la pince 7' sont placés à l'intérieur du plateau aval 5' et une position 70 de prise en charge de la bande, représentée en trait mixte sur la figure 6 et pour laquelle la pince mobile 7' est placée immédiatement en aval de la pince fixe 7.

Ainsi, au début du déroulement d'une bobine B, les rouleaux pinceurs P peuvent faire avancer la tête de la bande d'abord dans la cisaille C pour procéder à l'éboutage de la bande par la coupe de son extrémité avant M2 puis, successivement dans la pince amont 7 et la pince aval 7' placée dans la position 70.

L'extrémité avant M2 de la bande peut alors être prise en charge par la pince 7' qui se déplace vers l'aval, en déroulant la bobine B, jusqu'à la position de retournement, à l'intérieur du plateau aval 5'. Le chariot 40' est alors solidarisé avec le plateau 5' par deux organes de clamage 58' comportant chacun, par exemple, une broche actionnée par un vérin et venant s'engager dans un orifice correspondant de la traverse inférieure 41' du chariot 40'.

A la fin du déroulement de la bande, la cisaille C a coupé l'extrémité arrière M1 de celle-ci de façon que cette extrémité arrière se trouve au niveau de la face arrière du plateau amont 5 lorsque le chariot 40' arrive avec la pince 7' à l'intérieur du plateau aval 5'.

Comme précédemment, l'échantillon de bande M doit être mis en tension pour l'inspection. Pour cela, dans le mode de réalisation de la figure 6 avec dérouleuse, chacune des pinces 7, 7' est équipée d'une paire de rouleaux pinceurs, respectivement 71, 72 et 71', 72'.

Comme le montre la figure 7, la mâchoire inférieure de la pince mobile aval 7', comprend donc une plaque 61' formant un mors de serrage qui est suivi, dans le sens de défilement, d'un rouleau 71' tangent au plan de serrage défini par la face supérieure du mors 61'. Ce rouleau inférieur 71' est monté rotatif sur des paliers 71a' prenant appui dans la partie centrale de la traverse inférieure 41' qui présente une forme en U avec une partie arrière relevée formant la poutre 63' de support du mors inférieur 61' qui se trouve ainsi placé un peu en arrière du rouleau 71'.

De la même façon, la mâchoire supérieure de la pince mobile 7' comporte une plaque formant un mors supérieur 62' suivi, dans le sens de défilement d'un rouleau 72'.

Le mors supérieur 62' est placé à la verticale du mors inférieur 61' sur une poutre supérieure 65', qui est montée coulissante verticalement entre les deux montants 43' du chariot en forme de cadre 40', au-dessous de la traverse supérieure 42'. Celle-ci peut être constituée d'un simple plat renforcé par un gousset 42'a et sur lequel sont fixés les corps des vérins de serrage 66' dont les tiges 66'a sont articulées sur la poutre 65'. Comme le montre la figure 7, les deux mors de serrage 61', 62' sont centrés sur un même plan vertical passant par les axes des deux vérins 66'.

La poutre 65' de support du mors supérieur 62' est munie, à ses extrémités, de deux parties de support 65'a qui s'étendent en console vers l'avant et forment chacune un plat de suspension d'une extrémité du rouleau supérieur 72' qui est centré dans le plan vertical passant par l'axe du rouleau inférieur 71'.

Ce rouleau supérieur 72' est en effet porté par deux paliers 72'a dont les cages sont suspendues aux deux parties en console 65'a, chacune par une tige 73' sur laquelle est enfilé un ressort constitué, par exemple, d'un empilement de rondelles Belleville prenant appui, vers le bas sur la cage du palier 72'a et vers le haut sur la partie en console 65'a de la poutre 65'.

Le rouleau inférieur 71' est disposé sur la traverse 41' du chariot 40' de façon que sa génératrice d'appui supérieure se trouve au même niveau que la face de serrage du mors inférieur 61'. En revanche, dans la position d'écartement des mors représentée sur la figure 7, la génératrice d'appui du rouleau supérieur 72' se trouve légèrement au-dessous du niveau de la face de serrage du mors supérieur 62'.

De la sorte, lorsque les vérins de serrage 66' sont actionnés pour la prise en charge de l'extrémité avant M1 de la bande, dans la position 70 de la pince mobile 7', le rouleau supérieur 72' vient en contact avec la bande M avant le mors supérieur 62' et exerce donc sur la tôle une pression de serrage déterminée par l'écrasement des ressorts des deux organes de suspension 73'. Ces ressorts peuvent être tarés pour que cette pression de serrage soit suffisante, d'abord pour l'entraînement de la bande avec la pince 7' lorsque le chariot 40' est ramené dans le plateau aval 5' puis, après la coupe de l'échantillon M, pour la mise en tension de celui-ci avant le serrage des mors.

En effet, comme indiqué plus haut, l'extrémité arrière M1 de l'échantillon de bande M a été coupée par la cisaille C et se trouve entre les deux mâchoires de la pince fixe 7 disposée dans le plateau amont 5.

Comme le montrent les figures 9 et 10, cette pince fixe 7 est réalisée de façon analogue à la pince mobile 7'. Chaque mâchoire de la pince fixe 7 comporte donc un plat formant un mors de serrage et associé à un rouleau mais, dans ce cas, les deux rouleaux 71, 72 sont placés en amont des deux mors de serrage 61, 62.

Comme pour la pince mobile, le rouleau inférieur 71 de la pince fixe 7 est porté par des paliers 71 a placés dans la partie centrale de la traverse inférieure 41 qui présente une forme en U. Dans ce cas, cependant, c'est la partie avant, dans le sens de défilement, de cette traverse 41 qui forme la poutre inférieure 63 de support du mors inférieur 61 et celui-ci est centré dans le même plan vertical que le mors supérieur 62 porté par la poutre supérieure 65 qui est montée coulissante entre deux montants latéraux 43 reliés par une traverse supérieure 65 sur laquelle prennent appui les corps des vérins de serrage 66 dont les tiges sont articulées sur ladite poutre supérieure 65. Celle-ci est munie, à ses extrémités, de deux parties 65a s'étendant en console vers l'arrière, au-dessus des extrémités du rouleau supérieur 72 qui est centré dans le même plan vertical que le rouleau inférieur 71, c'est-à-dire en amont des deux mors de serrage 61, 62. Ce rouleau supérieur 72 est centré sur deux paliers 72a suspendus aux deux parties en console 65a de la poutre 65, chacun par une tige de suspension 73 sur laquelle est enfilé un ressort 73a qui est comprimé entre la cage du palier 72a et un plat formant la partie supérieure de la partie en console 65a.

Comme pour la pince mobile 7', les ressorts sont tarés de façon que la génératrice inférieure d'appui du rouleau supérieur 72 se trouve un peu au-dessous de la face de serrage du mors supérieur 62 dans la position d'écartement des mors représentés sur les figures 9 et 10.

Le dispositif fonctionne donc de la façon suivante.

Comme indiqué plus haut, après cisaillage de l'extrémité avant M1 de la bande, celle-ci est prise en charge par serrage entre les deux rouleaux 71', 72' mais la pression de serrage est exercée seulement par les ressorts tarés 73', sans contact des mors de serrage 61', 62'. Cette pression est cependant suffisante pour permettre le déroulement de la bande par déplacement du chariot 40' qui est guidé successivement par les rails 56 du plateau amont 5 et les rails intermédiaires 26, avant de s'engager dans les rails 56' du plateau aval 5'. A la fin de son déroulement, la bande a été cisaillée par la cisaille C de façon à ménager l'extrémité arrière M2 de l'échantillon de bande M qui vient se placer dans la pince fixe 7 lorsque la pince mobile 7' est revenue dans le plateau aval 5', l'ensemble étant solidarisé longitudinalement par les organes de clamage 58'.

Les vérins 66 de la pince fixe 7 sont alors actionnés de façon à serrer les rouleaux 71, 72 sur l'extrémité amont M1 de l'échantillon de bande M mais, comme pour la pince mobile 7', le déplacement du mors supérieur 62 est arrêté avant de venir en contact avec l'échantillon M. Celui-ci est donc maintenu uniquement entre les deux paires de rouleaux 71, 72 et 71', 72' et la pression résultant du tarage des ressorts 73a, 73'a est réglée de façon à permettre la mise en tension de la bande par rotation en sens contraire des rouleaux inférieurs 71, 71' entraînées chacun par un moteur 74, 74'.

La bande étant ainsi mise en tension, les vérins 66, 66' de chacune des pinces 7, 7' peuvent être actionnés de nouveau pour serrer chaque extrémité M1, M2 de l'échantillon entre les mors, respectivement 61, 62, 61', 62', des deux pinces 7, 7'.

L'effort de traction appliqué sur l'échantillon par la rotation en sens contraire des deux paires de rouleaux doit être suffisant pour permettre l'inspection par pierrage de l'échantillon sans que celui-ci soit appliqué sur une table. Du fait que, après la mise en tension, l'échantillon est serré, à ses extrémités, entre les deux paires de mors 61, 62, 61', 62', cet effort de traction peut être maintenu pour l'inspection d'une première face puis, après retournement par rotation simultanée des deux plateaux 5, 5', pour l'inspection de la seconde face.

Dans ce mode de réalisation, il n'est pas nécessaire de disposer d'une table de liaison entre les deux plateaux 5, 5' puisque le déroulement de la bande est commandé par le déplacement du chariot 40' de support de la pince mobile, la bande pouvant être mise sous une tension suffisante, soit au moyen des rouleaux pinceurs P, soit, simplement, en freinant la dérouleuse, ce qui permet d'ouvrir les rouleaux pinceurs et, ainsi, d'éviter tout risque de contact des deux faces de l'échantillon de bande avec un autre organe.

Il peut, cependant, être utile de placer encore une table de liaison mobile verticalement entre les deux plateaux 5, 5', cette table étant soulevée, après l'inspection, jusqu'au niveau du plan de défilement pour y faire reposer l'échantillon de bande et faciliter l'évacuation de celle-ci.

Bien entendu, l'invention ne se limite pas aux détails des modes de réalisation qui viennent d'être décrits à titre d'exemples mais couvre au contraire toutes les variantes entrant dans le cadre de protection revendiqué.

II est à noter, par exemple, qu'avant la mise en tension de l'échantillon, les rouleaux pinceurs motorisés de l'une des pinces pourraient servir à un positionnement précis de l'échantillon, l'autre pince restant ouverte.

Par ailleurs, pour simplifier le mode de réalisation avec dérouleuse d'inspection décrit plus haut, il serait possible d'équiper de rouleaux pinceurs uniquement l'une des deux pinces qui, dans ce cas, servirait seule à la mise en tension de l'échantillon, celui-ci étant maintenu, à l'autre extrémité par les mors de l'autre pince.

D'autre part, d'autres moyens équivalents pourraient être employés pour le serrage des extrémités de l'échantillon, la mise en tension et le retournement de celui-ci.

## Revendications

1. Procédé d'inspection d'une bande laminée, dans lequel un échantillon de bande (M) est inspecté sur une première face puis retourné pour l'inspection d'une seconde face, ledit échantillon de bande (M) ayant une forme sensiblement rectangulaire centrée sur un axe longitudinal O, avec deux extrémités transversales (M1,M2) écartées l'une de l'autre de la longueur de l'échantillon de bande, **caractérisé par le fait que**, par défilement parallèlement à son axe longitudinal, l'échantillon de bande (M) est amené entre deux pinces espacées (6, 6') (7, 7') qui sont serrées respectivement sur chaque extrémité transversale (M1, M2) de l'échantillon (M), que les deux pinces (6, 6') (7, 7') sont écartées longitudinalement l'une de l'autre afin de mettre l'échantillon (M) sous tension pour l'inspection visuelle d'une première face, puis que l'échantillon est retourné, par rotation simultanée des deux pinces (6, 6') (7, 7') autour de l'axe longitudinal O, avec maintien de la tension appliquée, de façon à procéder à l'inspection de la seconde face.

2. Procédé d'inspection selon la revendication 1, **caractérisé par le fait que**, par défilement longitudinal, l'échantillon de bande (M) est d'abord posé sur une table (20) placée entre deux pinces écartées (6, 6'), que les pinces (6, 6') sont serrées respectivement sur les deux extrémités (M 1, M2) de l'échantillon (M) puis écartées longitudinalement l'une de l'autre pour mettre l'échantillon (M) sous tension, que la table (20) est alors retirée et que l'inspection est réalisée d'abord sur une première face puis, après retournement, sur la seconde face de l'échantillon (M).

3. Procédé d'inspection selon la revendication 1, d'une bande enroulée en bobine et placée sur une dérouleuse d'inspection (D) associée à des moyens de commande du déroulement de la bande suivant une direction longitudinale et à des moyens de cisaillage (C), **caractérisé par le fait que** la bande déroulée est d'abord cisaillée pour réaliser une extrémité avant (M₁) d'un échantillon de bande (M) qui passe successivement dans deux pinces ouvertes, respectivement une première pince (7) portée par un plateau rotatif (5) centré sur un axe longitudinal (O) de déroulement et une seconde pince (7') porté par un chariot (40') monté coulissant longitudinalement et placée en aval de la première pince (7), puis la seconde pince (7') est serrée sur ladite extrémité avant (M₁) et le chariot (40') est déplacé longitudinalement vers l'aval pour commander le déroulement de la bande, en venant se fixer, avec ladite seconde pince (7') sur un second plateau rotatif (5') écarté longitudinalement du premier plateau (5) et centré sur un axe longitudinal (O), la bande est alors cisaillée pour réaliser une extrémité arrière (M₂) de l'échantillon de bande sur laquelle est serrée la première pince (7) et l'échantillon (M) est mis sous tension entre les deux pinces (7, 7') afin d'être inspecté successivement sur une première face puis sur une seconde face après retournement par rotation simultanée des deux plateaux (5, 5') autour de leur axe, avec maintien de la tension appliquée.

4. Procédé selon la revendication 3, **caractérisé par le fait que** le serrage d'au moins une extrémité de l'échantillon de bande (M) dans au moins l'une des pinces (7, 7') est effectué par pinçage entre deux rouleaux (71, 72) (71', 72') et qu'au moins l'un (71)(72) desdits rouleaux est entraîné en rotation pour la mise en tension de la bande (M) avant serrage entre deux mors de la pince (7, 7').

5. Procédé d'inspection d'un échantillon de bande (M) selon l'une des revendications 1 à 4, dans lequel l'inspection est réalisée par pierrage en passant une pierre sur une face de l'échantillon pour faire apparaître les défauts, **caractérisé par le fait que**, par écartement longitudinal des deux pinces de serrage (7, 7'), l'échantillon de bande (M) est mis sous une tension suffisante pour réaliser le pierrage sur chacune de ses deux faces sans application de la face opposée sur une table.

6. Dispositif d'inspection d'une bande laminée comportant des moyens de prélèvement, sur la bande laminée, d'un échantillon de bande (M) ayant une forme sensiblement rectangulaire avec un axe longitudinal et deux extrémités transversales (M1, M2) écartées de la longueur de l'échantillon (M), des moyens de maintien de l'échantillon suivant un plan, pour l'inspection visuelle d'une première face et des moyens de retournement de l'échantillon pour l'inspection d'une seconde face,
**caractérisé par le fait qu'**il comprend deux pinces espacées (6, 6') (7, 7') de serrage, respectivement, des deux extrémités transversales (M1, M2) de l'échantillon (M), portées respectivement par deux plateaux (5, 5') montés rotatifs autour d'un même axe longitudinal, chacun dans un bâti de support (3, 4), des moyens (37) de mise en tension de l'échantillon (M) par écartement relatif des deux pinces (6, 6') (7, 7'), après serrage des extrémités (M1, M2) de l'échantillon (M), pour le maintien de celui-ci suivant un plan d'inspection passant par l'axe longitudinal (O) et des moyens (55, 55') de commande de la rotation simultanée, autour de l'axe longitudinal O, des deux plateaux (5, 5') avec les pinces (6, 6'), pour le retournement de l'échantillon (M) avec maintien de la tension appliquée sur celle-ci entre les deux pinces (6, 6') (7, 7').

7. Dispositif d'inspection selon la revendication 6, **caractérisé par le fait que** chaque plateau rotatif (5, 5') comporte un châssis en forme de disque circulaire centré sur l'axe longitudinal de rotation (O) et muni d'une échancrure centrale (50, 50') dans laquelle est montée une pince (6, 6') comportant deux mâchoires de serrage (61, 62) (61', 62') déplaçables l'une par rapport à l'autre, perpendiculairement à l'axe longitudinal de rotation (O) et des moyens (66, 66') de commande du serrage et du desserrage desdites mâchoires (61, 62) (61', 62') prenant appui, en des sens opposé, sur le châssis du plateau (5, 5').

8. Dispositif d'inspection selon la revendication 7, **caractérisé par le fait que** les deux plateaux rotatifs (5, 5') sont montés respectivement dans deux bâtis de support (3, 4) en forme de cadre écartés l'un de l'autre et que chaque plateau (5, 5') est limité par une jante circulaire (52, 52') et repose sur une paire de deux galets écartés symétriquement de part et d'autre d'un plan médian vertical et montés rotatif sur le bâti (3, 4) autour d'axes parallèles à l'axe longitudinal de rotation, le dispositif comprenant, en outre, des moyens synchronisés (55, 55') d'entraînement en rotation, autour de leur axe, d'au moins un galet (32, 32') de support de chacun des deux plateaux (5, 5'), pour le retournement de l'échantillon serré entre les mâchoires (61, 62) (61', 62') des deux pinces (6, 6'), par rotation simultanée des deux plateaux circulaires (5, 5').

9. Dispositif d'inspection selon la revendication 8, **caractérisé par le fait que** chaque bâti de support (3, 4) porte au moins deux paires de galets de maintien (33) montés rotatifs autour d'axes passant par l'axe longitudinal de rotation du plateau et prenant appui sur les côtés latéraux de la jante (52, 52'), de part et d'autre de celle-ci, pour le centrage du plateau (5, 5') sur un plan orthogonal à l'axe longitudinal de rotation (O).

10. Dispositif d'inspection selon l'une des revendications précédentes, **caractérisé par le fait que** chaque pince de serrage (6, 6') comporte deux mâchoires, respectivement une mâchoire fixe ménageant une face de serrage plane (61) placée sensiblement au niveau de l'axe de rotation (O) et une mâchoire mobile (62) ménageant une face de serrage plane parallèle à la face de serrage de la mâchoire fixe (61) et comportant une poutre (65) montée coulissante perpendiculairement auxdites faces planes et un moyen (66) de déplacement de la mâchoire mobile (62) par rapport à la mâchoire fixe (61) pour le serrage et le desserrage desdites faces planes.

11. Dispositif d'inspection selon l'une des revendications 6 à 10, **caractérisé par le fait que** l'un des plateaux (5) est porté par un bâti fixe (4) et que l'autre plateau (5') est porté par un bâti mobile (3) monté coulissant sur un support fixe (36), parallèlement à l'axe longitudinal de rotation des deux plateaux, ledit bâti fixe (36) portant des moyens (37) de commande du coulissement du bâti mobile (3) pour la mise en tension de l'échantillon de bande (M) après serrage des pinces (6, 6').

12. Dispositif d'inspection selon l'une des revendications 6 à 11, **caractérisé par le fait qu'**il comprend une table (20) mobile verticalement, s'étendant entre les deux plateaux rotatifs (5, 5') et ayant une face supérieure plane parallèle à l'axe longitudinal de rotation, et des moyens (21) de déplacement vertical de la table (20) entre une position relevée pour laquelle sa face supérieure se trouve sensiblement au niveau des pinces de serrage (6, 6') et une position abaissée.

13. Dispositif d'inspection selon la revendication 11, **caractérisé par le fait qu'**il comporte des moyens (15, 10, 20) d'amenée de l'échantillon de bande (M) entre les pinces (6, 6'), qui sont agencés de façon à déterminer, après découpe de l'échantillon de bande (M), un déplacement continu de celui-ci parallèlement à lui-même, jusqu'à une position d'inspection entre les deux plateaux rotatifs (5, 5').

14. Dispositif d'inspection selon la revendication 13, **caractérisé que** les moyens d'amenée de l'échantillon de bande (M) comportent une table de support (20) ayant une face supérieure plane s'étendant, dans une position de prise en charge par les pinces (6, 6'), dans un plan de serrage passant par l'axe de rotation (O) des deux plateaux (5, 5') et des moyens (12, 15, 10) de déplacement de l'échantillon de bande (M), parallèlement à elle-même, depuis la cisaille (C) jusqu'à la table de support (20).

15. Dispositif d'inspection selon la revendication 14, **caractérisé par le fait qu'**il comprend des moyens (21) de commande du déplacement vertical de la table de support (20), parallèlement à elle-même, entre une première position de pose et de prise en charge de l'échantillon de bande (M) par les pinces (6, 6') et une seconde position de retournement de l'échantillon (M), la table étant écartée.

16. Dispositif d'inspection selon l'une des revendications 13 à 15, **caractérisé par le fait que** les moyens d'amenée de l'échantillon de bande (M) comportent une table de transfert (10) ayant une extrémité amont, dans le sens de déplacement, s'étendant au-dessus d'un dispositif (11, 11') d'enroulement en bobine de la bande laminée et une extrémité aval se trouvant au niveau de la table de support (20).

17. Dispositif d'inspection selon l'une des revendications 11 à 16, **caractérisé par le fait que** l'installation comporte, en aval d'une cisaille, des moyens d'aiguillage (14, 14') ayant deux positions, respectivement une première position de guidage de la bande vers des moyens (11, 11') d'enroulement en bobine de la bande et une seconde position de guidage, vers le dispositif d'inspection (1), d'un échantillon de bande (M) prélevé sur la bande par cisaillage successif de deux extrémités (M1, M2) écartées de la distance voulue.

18. Dispositif d'inspection selon l'une des revendications 6 à 10, d'une bande enroulée en bobine, **caractérisé par le fait qu'**il comporte une dérouleuse (D) sur laquelle est posée la bobine (B) à inspecter, des moyens de commande du déroulement de la bande suivant un plan longitudinal de défilement, des moyens (C) de cisaillage de la bande suivant une ligne transversale à la direction de déroulement et deux pinces (7, 7') de serrage de la bande placées l'une après l'autre suivant la direction longitudinale de déroulement, respectivement une première pince (7) portée par un premier plateau (5) placé en aval des moyens de cisaillage (C), dans le sens de déroulement et une seconde pince (7') portée par un chariot (40') monté coulissant, parallèlement à la direction longitudinale de déroulement, entre une position de prise en charge de la bande, placée immédiatement en aval de la première pince (7), et une position d'inspection pour laquelle le chariot (40') de support de la seconde pince (7') vient se fixer sur un second plateau rotatif (5'), écarté longitudinalement vers l'aval par rapport au premier plateau rotatif (5), et centré sur un axe longitudinal (O), des moyens (66, 66') de commande du serrage de la première (7) et de la seconde pince (7') sur deux extrémités, respectivement avant (M1) et arrière (M2), d'un échantillon de bande (M) prélevé sur la bande par cisaillage successif desdites extrémités, et des moyens de commande (55, 55') de la rotation simultanée des deux plateaux rotatifs (5, 5') autour de leur axe (O) pour l'inspection successive d'une première et d'une seconde face de l'échantillon de bande (M).

19. Dispositif d'inspection selon la revendication 18, **caractérisé par le fait qu'**au moins l'une des pinces comporte, d'une part, deux mors de serrage (61, 62) montés respectivement sur deux poutres de support (63, 65) déplaçables l'une par rapport à l'autre entre une position écartée et une position de serrage des mors (61, 62) et deux rouleaux (71, 72) montés respectivement sur les deux poutres (63, 65) à côté du mors correspondant (61, 62), au moins l'un des rouleaux (72) étant décalé en hauteur par rapport au mors correspondant (62), dans la position écartée des mors, par un moyen élastique (73a), de façon que l'extrémité correspondante de l'échantillon (M) soit pincée entre ledit rouleau décalé (72) et l'autre rouleau (71) avant le serrage des deux mors (61, 62), après compression dudit moyen élastique (73a).

20. Dispositif selon la revendication 19, **caractérisé par le fait que** chaque pince 7, 7' comporte un mors fixe (61) monté sur une poutre (63) solidaire d'une traverse fixe (41) portant un premier rouleau cylindrique (71) ayant une génératrice de contact placée au même niveau que la face de serrage du mors fixe (61), et un mors mobile (62) monté sur une poutre mobile (65) déplaçable transversalement à la direction de défilement entre une position écartée et une position de serrage des mors (62), ladite poutre (65) ayant une partie (65'a) de support d'un second rouleau (72) par l'intermédiaire d'un moyen élastique (73a) de poussée vers le mors fixe (61) du second rouleau (72) de façon que ce dernier présente une génératrice de contact décalée vers le premier rouleau (71) par rapport au mors mobile (62) et que, par un premier déplacement de la poutre mobile (65) vers la traverse fixe (41), les deux rouleaux (71, 72) prennent appui l'un sur l'autre avant le serrage des mors (61, 62), avec une pression d'application déterminée par un tarage du moyen élastique (73a), un second déplacement de la poutre mobile (65) déterminant le serrage des mors (61, 62) avec écrasement du moyen élastique (73a).

21. Dispositif selon l'une des revendications 19 et 20, **caractérisé par le fait qu'**au moins l'un des rouleaux (72) est entraîné en rotation après pinçage de l'échantillon (M) dans le sens d'une mise en tension de celui-ci avant le serrage des mors correspondants (61, 62).

## Claims

1. A method of inspection of a rolled band, wherein a band sample (M) is inspected on a first face and then turned over for the inspection of a second face, said band sample (M) having a substantially rectangular shape centred on a longitudinal axis O, with two transversal ends (M1, M2) spaced apart from one another by the length of the band sample, **characterised in that**, by running parallel to its longitudinal axis, the band sample (M) is brought between two spaced apart grips (6, 6') (7, 7') which are clamped respectively on each transversal end (M1, M2) of the sample (M), the two grips (6, 6') (7, 7') are spaced apart longitudinally from one another so as to stretch the sample (M) for visual inspection of a first face, then the sample is turned over by simultaneous rotation the two grips (6, 6') (7, 7') around the longitudinal axis O, while holding the tension applied, so as to proceed to the inspection of the second face.

2. A method of inspection according to claim 1, **characterised in that**, by running longitudinally, the band sample (M) is first laid on a table (20) situated between two spaced apart grips (6, 6'), **in that** the grips (6, 6') are clamped respectively on the two ends (M1, M2) of the sample (M) and then spaced apart longitudinally from one another so as to stretch the sample (M), **in that** the table (20) is then withdrawn and the inspection is carried out first of all on a first face and then, after turning over, on the second face of the sample (M).

3. A method of inspection according to claim 1, of a band wound into a coil and placed on an inspection unwinder (D) associated with means for controlling the unwinding of the band along a longitudinal direction and shearing means (C), **characterised in that** the unwound band is first shorn to provide a band sample (M) with a front end (M₁) running successively between two open grips, respectively a first grip ( 7) carried by a rotary platen (5) centred on a longitudinal unwinding axis (O) and a second grip (7') carried by a carriage (40') mounted slidingly longitudinally and situated downstream of the first grip (7), then the second grip (7') is clamped on said front end (M₁) and the carriage (40') is moved longitudinally downwards to control the unwinding of the band and to be fastened, with said second grip (7'), on a second rotary platen (5') spaced apart longitudinally from the first platen (5) and centred on a longitudinal axis (O), the band is then shorn to provide a rear end (M₂) of the band sample, on which the first grip (7) is clamped, and the sample (M) is stretched between the two grips (7, 7') so as to be inspected successively on a first face and then on a second face after turning over by simultaneous rotation of the two platens (5, 5') around their axis, while holding the tension applied.

4. A method according to claim 3, **characterised in that** the clamping of at least one end of the band sample (M) in at least one of the grips (7, 7') is conducted by gripping between two rolls (71, 72) (71', 72') and at least one (71) (72) of said rolls is driven into rotation, for stretching the band (M) before clamping it between two cheeks of the grip (7, 7').

5. A method of inspection of a band sample (M) according to any of the claims 1 to 4, wherein the inspection is conducted by honing, i.e. by rubbing a stone over the face of the sample to make the defects visible, **characterised in that**, by spacing apart longitudinally the two clamping grips (7, 7'), the band sample (M) is stretched sufficiently so as to conduct the honing on each of its two faces without application of the opposite face onto a table.

6. An inspection device for a rolled band comprising means for sampling, on the rolled band, a band sample (M) of substantially rectangular shape with a longitudinal axis and two transversal ends (M1, M2) spaced apart by the length of the sample (M), means for holding the sample along a plane for the visual inspection of a first face, and means for turning the sample over for inspection of a second face,
**characterised in that** it includes two spaced apart clamping grips (6, 6') (7, 7') for clamping respectively the two transversal ends (M1, M2) of the sample (M), the grips being carried respectively by two platens (5, 5') mounted rotatably around the same longitudinal axis, each in a supporting stand (3, 4), means (37) for stretching the sample (M) by spacing apart the two grips (6, 6') (7, 7')after clamping the ends (M1, M2) of the sample (M) for holding it along an inspection plane running through the longitudinal axis (O), and means (55, 55') for controlling the simultaneous rotation, around the longitudinal axis O, of the two platens (5, 5') with the grips (6, 6') for turning the sample (M) over while holding the tension applied thereto between both grips (6, 6') (7, 7').

7. An inspection device according to claim 6, **characterised in that** each rotary platen (5, 5') includes a chassis in the form of a circular disk centred on the rotational longitudinal axis (O) and fitted with a central scalloping (50, 50') wherein is mounted a grip (6, 6') including two clamping jaws (61, 62) (61', 62') movable relative to one another, perpendicular to the rotational longitudinal axis (O), and means (66, 66') for controlling the clamping and the releasing of said jaws (61, 62) (61', 62') resting, in opposite directions, on the chassis of the platen (5, 5').

8. An inspection device according to claim 7, **characterised in that** the two rotary platens (5, 5') are mounted respectively in two supporting stands (3, 4) in the form of a frame spaced apart from one another and that each platen (5, 5') is delineated by a circular rim (52, 52') and rests on a pair of two rollers spaced apart symmetrically on the two sides of a medial vertical plane and mounted rotatably on the stand (3, 4) around axes parallel to the rotational longitudinal axis, the device including, moreover, synchronised means (55, 55') for driving into rotation, around their axis, at least one roller (32, 32') supporting each of the two platens (5, 5'), for turning over the sample clamped between the jaws (61, 62) (61', 62') of both grips (6, 6'), by the simultaneous rotation of both circular platens (5, 5').

9. An inspection device according to claim 8, **characterised in that** each supporting stand (3, 4) carries at least two pairs of holding rollers (33) mounted rotatably around axes running through the rotational longitudinal axis of the platen and resting on the lateral sides of the rim (52, 52'), on both sides thereof, for centring the platen (5, 5') on a plane perpendicular to the rotational longitudinal axis (O).

10. An inspection device according to any of the previous claims, **characterised in that** each clamping grip (6, 6') includes two jaws, respectively a fixed jaw providing a planar clamping face (61) situated substantially on the rotational axis (O) and a mobile jaw (62) providing a planar clamping face parallel to the clamping face of the fixed jaw (61) and including a beam (65) mounted slidingly perpendicular to said planar faces and a means (66) for moving the mobile jaw (62) relative to the fixed jaw (61) for clamping and releasing said planar faces.

11. An inspection device according to any of the claims 6 to 10, **characterised in that** one of the platens (5) is carried by a fixed stand (4) and that the other platen (5') is carried by a mobile stand (3) mounted slidingly on a fixed support (36), parallel to the rotational longitudinal axis of both platens, said fixed stand (36) carrying means (37) for controlling the sliding of the mobile stand (3) for stretching the band sample (M) after clamping the grips (6, 6').

12. An inspection device according to any of the claims 6 to 11, **characterised in that** it includes a table (20) mobile vertically, extending between the two rotary platens (5, 5') and having a planar upper face parallel to the rotational longitudinal axis, and means (21) for the vertical displacement of the table (20) between a raised position where its upper face lies substantially at the clamping grips (6, 6') and a lowered position.

13. An inspection device according to claim 11, **characterised in that** it includes means (15, 10, 20) for conveying the band sample (M) between the grips (6, 6'), which are arranged so as to determine, after cutting the band sample (M), a continuous displacement of the band sample parallel to itself, up to an inspection between both rotary platens (5, 5').

14. An inspection device according to claim 13, **characterised in that** the conveying means of the band sample (M) include a supporting table (20) having a planar upper face extending, in a pick-up position by the grips (6, 6'), in a clamping plane running through the rotational axis (O) of both platens (5, 5') and means (12, 15, 10) for moving the band sample (M), parallel to itself, from the shears (C) to the supporting table (20).

15. An inspection device according to claim 14, **characterised in that** it includes means (21) for controlling the vertical displacement of the supporting table (20), parallel to itself, between a first laying and pick-up position of the band sample (M) by the grips (6, 6') and a second turning-over position of the sample (M), the table being then spaced apart.

16. An inspection device according to any of the claims 13 to 15, **characterised in that** the conveying means of the band sample (M) include a transfer table (10) having an upstream end, in the displacement direction, extending above a device (11, 11') for winding the rolled band into a coil and a downstream end situated at the supporting table (20).

17. An inspection device according to any of the claims 11 to 16, **characterised in that** the installation includes, downstream of the shears, switching means (14, 14') having two positions, respectively a first position for guiding the band towards means (11, 11') for winding the band into a coil and a second guiding position for guiding, towards the inspection device (1), a band sample (M) taken from the band by successive shearing of two ends (M1, M2) spaced apart with the required distance.

18. An inspection device according to any of the claims 6 to 10, of a band wound into a coil, **characterised in that** it includes an unwinder (D) whereon the coil (B) to be inspected is laid, means for controlling the unwinding of the band along a longitudinal running direction, means (C) for shearing the band along a line transversal to the unwinding direction and two grips (7, 7') for clamping the band situated after one another along the longitudinal unwinding direction, respectively a first grip (7) carried by a first platen (5) situated downstream of the shearing means (C), in the unwinding direction and a second grip (7') carried by a carriage (40') mounted slidingly, parallel to the longitudinal unwinding direction, between a first laying and pick-up position of the band, situated immediately downstream of the first grip (7), and an inspection position for which the carriage (40') for supporting the second grip (7') is fastened to a second rotary platen (5'), spaced apart longitudinally downwards relative to the first rotary platen (5), and centred on a longitudinal axis (O), means (66, 66') for controlling the clamping of the first (7) and of the second grip (7') on two ends, respectively a front (M1) and a rear end (M2), of a band sample (M) taken from the band by successive shearing of said ends, and means for controlling (55, 55') the simultaneous rotation of both rotary platens (5, 5') around their axis (O) for successive inspection of a first face and a second face of the band sample (M).

19. An inspection device according to claim 18, **characterised in that** at least one of the grips includes, on the one hand, two clamping cheeks (61, 62) mounted respectively on two supporting beams (63, 65) movable relative to one another between a spaced apart position and a clamping position of the cheeks (61, 62) and two rolls (71, 72) mounted respectively on both supporting beams (63, 65) beside the corresponding cheek (61, 62), at least one of the rolls (72) being offset vertically relative to the corresponding cheek (62), in the spaced apart position of the cheeks, by a resilient means (73a), so that the corresponding end of the sample (M) is gripped between said offset roll (72) and that the other roll (71) before the clamping of both cheeks (61, 62), after compressing said resilient means (73a).

20. A device according to claim 19, **characterised in that** each grip 7, 7' includes a fixed cheek ( 61) mounted on a beam (63) integral with a fixed crosspiece (41) carrying a first cylindrical roll (71) having a contact generatrix situated at the same level that the clamping face of the fixed cheek (61), and a mobile cheek (62) mounted on a mobile beam (65) movable transversally to the running direction between a spaced apart position and a clamping position of the cheeks (62), said beam (65) having a portion (65'a) for supporting a second roll (72) by means of a resilient means (73a) for pushing the second roll (72) toward the fixed cheek (61) so said second roll exhibits a contact generatrix offset toward the first roll (71) relative to the mobile cheek (62), and **in that**, by a first displacement of the mobile beam (65) toward the fixed crosspiece (41), the two rolls (71, 72) bear upon one another before the clamping of the cheeks (61, 62), with an application pressure determined by a calibration of the resilient means (73a), a second displacement of the mobile beam (65) defining the clamping of the cheeks (61, 62) by crushing the resilient means (73a).

21. A device according to any of the claims 19 and 20, **characterised in that** at least one of the rolls (72) is driven into rotation after gripping the sample (M) in a stretching direction thereof, before clamping the corresponding cheeks (61, 62).

## Patentansprüche

1. Verfahren zur Inspektion von Walzband, wobei ein Bandprüfstück (M) auf einer ersten Seite untersucht und dann zur Inspektion einer zweiten Seite umgedreht wird, wobei das Bandprüfstück (M) eine im Wesentlichen rechteckige Form aufweist, die auf einer Längsachse O zentriert ist, wobei die beiden Querenden (M1, M2) um die Länge des Bandprüfstücks voneinander entfernt sind, **dadurch gekennzeichnet, dass** das Bandprüfstück (M) durch Ablaufen parallel zu seiner Längsachse zwischen zwei beabstandete Klauen (6, 6') (7, 7') gebracht wird, die jeweils an jedem Querende (M1, M2) des Prüfstücks (M) festgeklemmt sind, dass die beiden Klauen (6, 6') (7, 7') der Länge nach voneinander entfernt sind, um das Prüfstück (M) für eine Sichtprüfung einer ersten Seite aufzuspannen, dass das Prüfstück dann durch gleichzeitiges Drehen der beiden Klauen (6, 6') (7, 7') um die Längsachse O, unter Beibehaltung der angelegten Spannung, umgedreht wird, um die Inspektion der zweiten Seite vorzunehmen.

2. Inspektionsverfahren nach Anspruch 1, **dadurch gekennzeichnet, dass** das Bandprüfstück (M) durch Längsablaufen zunächst auf einen Tisch (20) gelegt wird, der zwischen zwei ausgebreiteten Klauen (6, 6') angeordnet ist, dass die Klauen (6, 6') jeweils an den beiden Enden (M1, M2) des Prüfstücks (M) festgeklemmt und dann der Länge nach voneinander entfernt werden, um das Prüfstück (M) aufzuspannen, dass der Tisch (20) dann abgenommen wird und dass die Inspektion zunächst auf einer ersten Seite und dann nach dem Umdrehen auf der zweiten Seite des Prüfstücks (M) vorgenommen wird.

3. Verfahren nach Anspruch 1 zur Inspektion eines Bandes, das auf einer Spule aufgewickelt und auf einer Inspektionsabwickelhaspel (D) angeordnet ist, die mit Mitteln zum Steuern des Abwickelns des Bandes in Längsrichtung und mit Mitteln zum Abschneiden (C) verbunden ist, **dadurch gekennzeichnet, dass** das abgewickelte Band zunächst abgeschnitten wird, um ein Vorderende (M₁) eines Bandprüfstücks (M) auszubilden, das nacheinander durch zwei geöffnete Klauen geht, jeweils eine erste Klaue (7), die von einer Drehplatte (5) getragen wird, die auf einer Abwickellängsachse (O) zentriert ist, und eine zweite Klaue (7'), die von einem Schlitten (40') getragen wird, welcher der Länge nach gleitend angebracht ist und unterhalb der ersten Klaue (7) angeordnet ist, dann die zweite Klaue (7') am Vorderende (M₁) festgeklemmt wird und der Schlitten (40') der Länge nach abwärts verfahren wird, um das Abwickeln des Bandes zu steuern, indem er sich mit der zweiten Klaue (7') an einer zweiten Drehplatte (5') anlagert, die der Länge nach von der ersten Platte (5) entfernt und auf einer Längsachse (O) zentriert ist, das Band dann abgeschnitten wird, um ein Hinterende (M₂) des Bandprüfstücks auszubilden, an dem die erste Klaue (7) festgeklemmt ist, und das Prüfstück (M) zwischen den beiden Klauen (7, 7') aufgespannt wird, um nacheinander auf einer ersten Seite und dann auf einer zweiten Seite nach Umdrehen durch gleichzeitiges Drehen der beiden Platten (5, 5') um ihre Achse unter Beibehaltung der angelegten Spannung untersucht zu werden.

4. Verfahren nach Anspruch 3, **dadurch gekennzeichnet, dass** das Festklemmen mindestens eines Endes des Bandprüfstücks (M) in mindestens einer der Klauen (7, 7') durch Einklemmen zwischen zwei Walzen (71, 72) (71', 72') erfolgt, und dass mindestens eine (71) (72) der Walzen durch das Aufspannen des Bandes (M) vor dem Festklemmen zwischen zwei Backen der Klaue (7, 7') drehbar angetrieben wird.

5. Verfahren zur Inspektion eines Bandprüfstück (M) nach einem der Ansprüche 1 bis 4, wobei die Inspektion durch Ziehschleifen ausgeführt wird, indem ein Stein über eine Seite des Prüfstücks geführt wird, um Defekte sichtbar zu machen, **dadurch gekennzeichnet, dass** durch das längsseitige Ausbreiten der beiden Spannklauen (7, 7') das Bandprüfstück (M) ausreichend aufgespannt wird, um das Ziehschleifen auf jeder seiner beiden Seiten auszuführen, ohne die gegenüberliegende Seite an einen Tisch anzulegen.

6. Vorrichtung zur Inspektion von Walzband, umfassend Mittel, um von dem Walzband ein Bandprüfstück (M) zu entnehmen, das eine im Wesentlichen rechteckige Form aufweist mit einer Längsachse und zwei Querenden (M1, M2), die um die Länge des Prüfstücks (M) entfernt sind, die Mittel zur Halterung des Prüfstücks entlang einer Ebene für die Sichtprüfung einer ersten Seite und Mittel zum Umdrehen des Prüfstücks für die Inspektion einer zweiten Seite,
**dadurch gekennzeichnet, dass** sie folgendes umfasst: zwei beabstandete Klauen (6, 6') (7, 7') zum Festklemmen jeweils der beiden Querenden (M1, M2) des Prüfstücks (M), die jeweils von zwei Platten (5, 5') getragen werden, die um ein und dieselbe Längsachse drehbar montiert sind, jeweils in einem Tragrahmen (3, 4), Mittel (37) zum Aufspannen des Prüfstücks (M) durch relatives Ausbreiten der beiden Klauen (6, 6') (7, 7') nach dem Festklemmen der Enden (M1, M2) des Prüfstücks (M), um dieses entlang einer Inspektionsebene festzuhalten, die durch die Längsachse (O) geht, und Mittel (55, 55') zum Steuern der gleichzeitigen Drehung um die Längsachse O der beiden Platten (5, 5') mit den Klauen (6, 6') für das Umdrehen des Prüfstücks (M) unter Beibehaltung der daran zwischen den beiden Klauen (6, 6') (7, 7') angelegten Spannung.

7. Inspektionsvorrichtung nach Anspruch 6, **dadurch gekennzeichnet, dass** jede Drehplatte (5, 5') ein Gestell in Form einer kreisförmigen Scheibe umfasst, die um die Längsdrehachse (O) zentriert und mit einem mittigen Ausschnitt (50, 50') versehen ist, in dem eine Klaue (6, 6') angebracht ist, die zwei Klemmbacken (61, 62) (61', 62') umfasst, die rechtwinklig zur Längsdrehachse (O) und der Mittel (66, 66') zum Steuern des Festklemmens und des Lösens der Backen (61, 62) (61', 62'), die sich in entgegengesetzter Richtung auf dem Gestell der Platte (5, 5') abstützen, zueinander verfahrbar sind.

8. Inspektionsvorrichtung nach Anspruch 7, **dadurch gekennzeichnet, dass** die beiden Drehplatten (5, 5') jeweils in zwei Tragrahmen (3, 4) in Form eines Rahmens voneinander entfernt angebracht sind, und dass jede Platte (5, 5') durch eine kreisförmige Felge (52, 52') begrenzt ist und auf einem Paar Rollen ruht, die asymmetrisch auf beiden Seiten einer senkrechten mittleren Ebene entfernt und auf dem Rahmen (3, 4) um Achsen drehbar angebracht sind, die zu der Längsdrehachse parallel sind, wobei die Vorrichtung außerdem synchronisierte Mittel (55, 55') umfasst, um mindestens eine Rolle (32, 32') zum Tragen jeder der beiden Platten (5, 5') um ihre Achse drehend anzutreiben, um das zwischen den Backen (61, 62) (61', 62') der beiden Klauen (6, 6') festgeklemmte Prüfstück durch gleichzeitiges Drehen der beiden kreisförmigen Platten (5, 5') umzudrehen.

9. Inspektionsvorrichtung nach Anspruch 8, **dadurch gekennzeichnet, dass** jeder Tragrahmen (3, 4) mindestens zwei Halterollenpaare (33) trägt, die drehbar um Achsen angeordnet sind, die durch die Längsdrehachse der Platte gehen und sich auf den Seitenflächen der Felge (52, 52') auf beiden Seiten davon abstützen, um die Platte (5, 5') auf einer zu der Längsdrehachse (O) orthogonalen Ebene zu zentrieren.

10. Inspektionsvorrichtung nach einem der vorhergehenden Ansprüche, **dadurch gekennzeichnet, dass** jede Klemmklaue (6, 6') zwei Backen umfasst, jeweils eine feststehende Backe, die eine ebene Klemmfläche (61) vorsieht, die im Wesentlichen an der Drehachse (O) angeordnet ist, und eine bewegliche Backe (62), die eine Klemmfläche vorsieht, die zu der Klemmfläche der feststehenden Backe (61) planparallel ist und einen Balken (65), der rechtwinklig zu den ebenen Flächen gleitend angebracht ist, und ein Mittel (66) zum Verfahren der beweglichen Backe (62) im Verhältnis zu der feststehenden Backe (61) zum Festklemmen und Lösen der ebenen Flächen umfasst.

11. Inspektionsvorrichtung nach einem der Ansprüche 6 bis 10, **dadurch gekennzeichnet, dass** eine der Platten (5) von einem feststehenden Rahmen (4) getragen wird und dass die andere Platte (5') von einem beweglichen Rahmen (3) getragen wird, der auf einem feststehenden Träger (36) parallel zur Längsdrehachse der beiden Platten gleitend angebracht ist, wobei der feststehende Rahmen (36) Mittel (37) trägt zum Steuern des Gleitens des beweglichen Rahmens (3), um das Bandprüfstück (M) nach dem Festklemmen der Klauen (6, 6') aufzuspannen.

12. Inspektionsvorrichtung nach einem der Ansprüche 6 bis 11, **dadurch gekennzeichnet, dass** sie einen Tisch (20), der senkrecht beweglich ist, sich zwischen den beiden Drehplatten (5, 5') erstreckt und eine Oberseite aufweist, die zur Längsdrehachse planparallel ist, und Mittel (21) zum senkrechten Verfahren des Tischs (20) zwischen einer angehobenen Position, bei der sich seine Oberseite im Wesentlichen auf der Höhe der Klemmklauen (6, 6') befindet, und einer abgesenkten Position umfasst.

13. Inspektionsvorrichtung nach Anspruch 11, **dadurch gekennzeichnet, dass** sie Mittel (15, 10, 20) umfasst zum Zuführen des Bandprüfstücks (M) zwischen den Klauen (6, 6'), die angeordnet sind, um nach dem Ausschneiden des Bandprüfstücks (M) ein durchgehendes Verfahren davon parallel zu sich selber bis in eine Inspektionsposition zwischen den beiden Drehplatten (5, 5') zu bestimmen.

14. Inspektionsvorrichtung nach Anspruch 13, **dadurch gekennzeichnet, dass** die Mittel zum Zuführen des Bandprüfstücks (M) einen Tragetisch (20), der eine ebene Oberseite aufweist, die sich in einer Position zur Übernahme durch die Klauen (6, 6') in einer Festklemmebene, die durch die Drehachse (O) der beiden Platten (5, 5') geht, erstreckt, und Mittel (12, 15, 10) zum Verfahren des Bandprüfstücks (M) parallel zu sich selber vom Schneidegerät (C) bis zum Tragetisch (20) umfassen.

15. Inspektionsvorrichtung nach Anspruch 14, **dadurch gekennzeichnet, dass** sie Mittel (21) umfasst zum Steuern des senkrechten Verfahrens des Tragetisches (20) parallel zu sich selber zwischen einer ersten Position zum Aufstellen und Übernehmen des Bandprüfstücks (M) durch die Klauen (6, 6') und einer zweiten Position zum Umdrehen des Prüfstücks (M), wobei der Tisch entfernt ist.

16. Inspektionsvorrichtung nach einem der Ansprüche 13 bis 15, **dadurch gekennzeichnet, dass** die Mittel zum Zuführen des Bandprüfstücks (M) einen übergabetisch (10) umfassen, der ein in Verfahrrichtung oberes Ende, das sich oberhalb einer Vorrichtung (11, 11') zum Aufwickeln des Walzbands auf eine Spule erstreckt, und ein unteres Ende, das sich am Tragetisch (20) befindet, aufweist.

17. Inspektionsvorrichtung nach einem der Ansprüche 11 bis 16, **dadurch gekennzeichnet, dass** die Einrichtung unterhalb eines Schneidegeräts Weichenmittel (14, 14') mit zwei Positionen umfasst, jeweils einer ersten Position, um das Band zu den Mitteln (11, 11') zum Aufwickeln des Bands auf einer Spule zu führen, und einer zweiten Position, um ein Bandprüfstück (M), das von dem Band durch aufeinander folgendes Abschneiden von zwei Enden (M1, M2) entnommen wurde, die um den erwünschten Abstand entfernt sind, zur Inspektionsvorrichtung (1) zu führen.

18. Vorrichtung nach einem der Ansprüche 6 bis 10 zur Inspektion eines auf einer Spule aufgewickelten Bandes, **dadurch gekennzeichnet, dass** sie folgendes umfasst: eine Abwickelhaspel (D), auf welche die zu untersuchende Spule (B) gesetzt ist, Mittel zum Steuern des Abwickelns des Bands entlang einer Längsablaufebene, Mittel (C) zum Abschneiden des Bandes entlang einer Linie quer zur Abwickelrichtung und zwei Klauen (7, 7') zum Festklemmen des Bandes, die nacheinander entlang der Längsabwickelrichtung angeordnet sind, jeweils eine erste Klaue (7), die von einer ersten Platte (5) getragen wird, die unterhalb der Schneidemittel (C) in Abwickelrichtung angeordnet ist, und eine zweite Klaue (7'), die von einem Schlitten (40') getragen wird, der gleitend angebracht ist, parallel zur Lärigsabwickelrichtung, zwischen einer Position der Bandübernahme, die direkt unterhalb der ersten Klaue (7) angeordnet ist, und einer Inspektionsposition, für die der Schlitten (40') zum Tragen der zweiten Klaue (7') sich an einer zweiten Drehplatte (5') befestigt, die der Länge nach im Verhältnis zur ersten Drehplatte (5) nach unten entfernt und auf einer Längsachse (O) zentriert ist, Mittel (66, 66') zum Steuern des Festklemmens der ersten (7) und der zweiten Klaue (7') an zwei Enden, jeweils vorne (M1) und hinten (M2), eines Bandprüfstücks (M), das dem Band durch aufeinander folgendes Abschneiden der Enden entnommen wird, und Mittel (55, 55') zum Steuern der gleichzeitigen Drehung der beiden Drehplatten (5, 5') um ihre Achse (O), um nacheinander eine erste und eine zweite Seite des Bandprüfstücks (M) zu untersuchen.

19. Inspektionsvorrichtung nach Anspruch 18, **dadurch gekennzeichnet dass** mindestens eine der Klauen einerseits zwei Klemmbacken (61, 62) umfasst, die jeweils auf zwei Tragebalken (63, 65) angebracht sind, die zueinander zwischen einer entfernten Position und einer Klemmposition der Backen (61, 62) verfahrbar sind, und zwei Walzen (71, 72), die jeweils auf den beiden Balken (63, 65) neben der entsprechenden Backe (61, 62) angebracht sind, wobei mindestens eine der Walzen (72) im Verhältnis zu der entsprechenden Backe (62) in der entfernten Position der Backen durch ein elastisches Mittel (73a) in der Höhe verschoben ist, so dass das entsprechende Ende des Prüfstücks (M) zwischen der verschobenen Walze (72) und der anderen Walze (71) vor dem Festklemmen der beiden Backen (61, 62) nach dem Zusammendrücken des elastischen Mittels (73a) eingeklemmt wird.

20. Vorrichtung nach Anspruch 19, **dadurch gekennzeichnet, dass** jede Klaue 7, 7' eine feststehende Backe (61) umfasst, die auf einem Balken (63) angebracht ist, der mit einer feststehenden Querstrebe (41) einstückig ist, die eine erste Zylinderwalze (71) trägt, die über einen Kontaktgeber verfügt, der auf gleicher Höhe wie die Klemmseite der feststehenden Backe (61) angeordnet ist, und eine beweglichen Backe (42), die auf einem beweglichen Balken (65) angebracht ist, der quer zur Ablaufrichtung zwischen einer entfernten Position und einer Klemmposition der Backen (62) verfahrbar ist, wobei der Balken (65) einen Teil (65'a) zum Tragen einer zweiten Walze (72) über ein elastisches Mittel (73a) zum Drücken gegen die feststehende Backe (61) der zweiten Walze (72) aufweist, so dass letztere einen Kontaktgeber aufweist, der auf die erste Walze (71) zu im Verhältnis zur beweglichen Backe (62) verschoben ist, und dass durch ein erstes Verfahren des beweglichen Balkens (65) auf die feststehende Querstrebe (41) zu die beiden Walzen (71, 72) sich aufeinander vor dem Festklemmen der Backen (61, 62) mit einem bestimmten Andrückdruck abstützen, der durch eine Tarierung des elastischen Mittels (73a) bestimmt wird, wobei ein zweites Verfahren des beweglichen Balkens (65) das Festklemmen der Backen (61, 62) mit Zusammendrücken des elastischen Mittels (73a) bestimmt.

21. Vorrichtung nach einem der Ansprüche 19 und 20, **dadurch gekennzeichnet, dass** mindestens eine der Walzen (72) nach dem Einklemmen des Prüfstücks (M) in seiner Aufspannrichtung vor dem Festklemmen der entsprechenden Backen (61, 62) drehbar mitgenommen wird.
